# EUROPEAN PATENT SPECIFICATION

(11) **EP 2 193 472 B1**
(45) Date of publication and mention of the grant of the patent: **23.02.2011**
(21) Application number: 08807355.6
(22) Date of filing: 18.08.2008
(51) Int. Cl.: G06F 21/00, H04L 29/08, H04W 28/08, H04L 12/26

(54) **Method and apparatus for managing license capacity in a telecommunication network**
Verfahren und Vorrichtung zur Verwaltung der Lizenzkapazität in einem Telekommunikationsnetz
Procédé et appareil de gestion d'une capacité autorisée dans un réseau de télécommunication

(30) Priority: 20.08.2007 US 841459
(43) Date of publication of application: 09.06.2010
(73) Proprietor: Telefonaktiebolaget LM Ericsson (publ), 164 83 Stockholm (SE)
(72) Inventor: ZHU, Zhongwen, Saint-laurent, Québec H4R 3H7 (CA)
(74) Representative: HOFFMANN EITLE
(86) International application number: PCT/IB2008/053312
(87) International publication number: WO 2009/024921

(56) References cited:
- EP-A- 1 901 191
- US-A- 5 752 041
- US-A1- 2006 085 350
- US-A1- 2006 221 839
- US-B1- 7 096 469
- US-B1- 7 231 370

## Description

### Technical Field

The present invention generally relates to telecommunication networks, such as wireless communication networks, and particularly relates to managing license capacity within such networks.

### Background

Telecommunication networks offer an increasing range of services. For example, wireless communication networks, e.g., cellular networks, now offer their subscribers a wide range of packet data services, such as instant messaging, multimedia messaging, etc. Increasingly, the software enabling these services and other features rely on capacity licensing.

With capacity licensing, the amount or rate of service traffic is limited. For example, a network operator may deploy an instant messaging (IM) service, subject to a licensed upper limit on the number of instant messages that can be processed within the operator's network, or at specific nodes within the operator's network. The limit may be specified as, for example, X messages-per-second (MPS), where *X* represents some number.

In general, a given service is subject to a transactions-per-second (TPS) limit or other capacity license constraint. The traffic processors within the network that process traffic for the licensed service share the overall licensed capacity. It is known to make a static distribution of licensed capacity across the involved traffic processors. However, such distributions do not provide for efficient utilization of licensed capacity.

In more detail, in a single network node, for example, multiple licensed services can be deployed and run across a set of traffic processors. Thus, each such traffic processor processes traffic for one or more licensed services. As an example, licensed chat and IM services both may be deployed across the set of traffic processors.

With multiple licensed services being supported by the node, disparities may arise in the amount of licensed traffic being handled by the node for the different types of licensed service. For example, a first one of the traffic processors in the node may have an eighty percent load for IM traffic and a twenty percent load for chat traffic, while another traffic processor in the node may have a fifty percent load for both the IM and chat services traffic. Splitting the licensed transaction capacities for the different services across the traffic processors in a equal and/or static approach thus may yield good license utilization at some traffic processors, at least for some services, but may result in poor license utilization at other traffic processors.

US2006/0085350 discloses a system and method for transferring licenses from a server to another. In each server, a number of licenses is permitted. When a server exceeds that number, it sends a request to the other servers to ask for additional licenses. A server with available licences replies back with the requested additional licenses.

US2006/0221839 discloses a system for distributing a total licensed capacity among a plurality of network nodes, each of which receives an offered load capacity. When a network node fails, its received load capacity is redistributed among the rest of the network nodes.

US5752041 discloses a system for managing the utilization of a licensed program in a distributed environment in such a way as to minimize the amount of network communications. When a user needs to use the program, a token is required. If the local system of the user does not have an available free token, different license servers are polled in order to find a free token for the user. The free tokens are distributed to different systems in response to the usage requests and stay in these requesting local systems after the usage.

US7096469 discloses several logical partitions, in which portions of the processing resources are distributed by a logical partition manager. In each of the portion, a maximum limit is defined. A workload manager measures the actual resource consumption of each logical partition and compares the actual resource consumption with the maximum limit. If the actual resource consumption is higher than the maximum limit, a capping pattern is calculated in order to cap the actual resource consumption.

US723 1370 discloses a system for distributing licenses in a large organization through a license pool. The license pool is divided into reserved licenses and shared licensed. Each division of the large organization has a certain number of reserved licences. When a division needs more than the number of reserved licences, it can request for a shared license, if all the shared licenses are taken, it can request a reserved licence from other divisions, which is available, under certain restrictions.

### SUMMARY

The method according to the invention is defined by the features of independent claim 1, and the apparutus according to the invention is defined by the features of independent claim 8.

Traffic loads may be evaluated by comparing the traffic load at the individual traffic processors, which may be expressed in terms of license usage levels, e.g., a measure of the extent to which the amount of licensed capacity currently allocated to a given traffic processor is being utilized. Comparing the traffic loads to lower and upper load thresholds provides a basis for determining whether each traffic processor is lightly loaded or heavily loaded with respect to is current allocation of licensed capacity. Dynamic reallocation, for example, decreases the allocated capacity at one or more lightly loaded traffic processors and reallocates some or all of that released capacity to one or more heavily loaded traffic processors, thereby making better use of the overall licensed transaction capacity.

The processing circuits of the license manages may comprise hardware, software or any combination thereof. In at least one embodiment, the processing circuits of the license manager comprise one or more special- or general-purpose microprocessors executing stored program instructions providing the license management functionality.

In one or more embodiments, the license manager is located in or functionally associated with a single node in the telecommunication network, where the single node includes a set of traffic processors for processing traffic for one or more licensed services. In such embodiments, the license manager comprises a local license manager that provides dynamic reallocation of an overall licensed transaction capacity across the set of traffic processors within the node. The license manager also may comprise a license server, and the local license manager may be configured to communicate with the license server. For example, in at least one embodiment, the local license manager requests additional license capacity from the license server, such as in response to detecting high levels of license usage at one or more of the traffic processors in the set of traffic processors being managed by the local license manager.

In another embodiment, the individual traffic processors subject to license management comprise a set of traffic processors spanning two or more nodes within a telecommunication network. In at least one such embodiment, the license manager comprises a license server configured to dynamically adjust the allocated portions of licensed capacity across the two or more nodes. The license manager may further comprise, or at least be associated with, a local license manager in each of the two or more nodes. Each local license manager may be communicatively coupled to the license server and configured to report actual traffic load information to the license server, to support the dynamic reallocation of the allocated portions across the two or more nodes by the license server.

In yet another embodiment, a license manager manages licenses transaction capacity for one or more services in a telecommunication network and includes one or more processing circuits configured to distribute an overall number of license tokens among individual traffic processors in a set of traffic processors, where the overall number of license tokens represent a licensed transaction capacity for a licensed service. The license manager is further configured to redistribute the license tokens among the individual traffic processors responsive to differences in license token usage levels among the individual traffic processors. As an example, the license manager may make an initial, uniform distribution of license tokens (i.e., a uniform distribution of licensed capacity), and then dynamically redistribute the license to reflect differences in license token usage among the traffic processors.

### Brief Description of the Drawings

Fig. 1 is a block diagram of a telecommunication network that includes a license manager for managing license capacity for one or more licensed services provided by the telecommunication network.
Fig. 2 is a block diagram for one embodiment of a license manager configured to manage license capacity for a set of traffic processors providing processing for traffic associated with a licensed service.
Fig. 3 is a logic flow diagram for one embodiment of license capacity management processing.
Figs. 4 and 5 are diagrams of licensed capacity utilization before and after dynamic adjustment of licensed capacity at a traffic processor, in accordance with the processing of Fig. 3, for example.
Fig. 6 is a block diagram of one embodiment of a node in a telecommunication network, wherein a local license manager and/or a license server provide license capacity management for a set of traffic processors within the node.
Fig. 7 is a block diagram of one embodiment of plural nodes in a telecommunication network, wherein local license managers and/or a license server provide license capacity management for a set of traffic processors spanning two or more nodes.
Figs. 8 and 9 are logic flow diagrams illustrating example details for license capacity management processing, such as introduced in Fig. 3.
Fig. 10 is a logic flow diagram for another embodiment of capacity license management processing.

### DETAILED DESCRIPTION

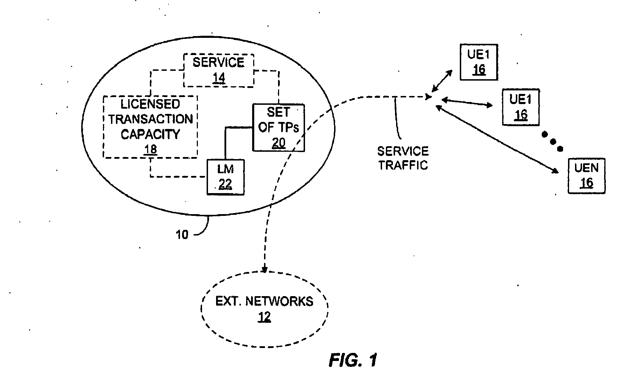

As a non-limiting example, Fig. 1 illustrates an embodiment of a telecommunication network 10, which may connect to one or more external networks 12 (e.g., the Internet), and which provides a licensed service 14 to one or more subscribers, represented as user equipment 16 (denoted in the drawing as multiple subscriber devices UE1, UE2, ..., UE*N*). The service 14, such as an instant-messaging (IM) service, is subject to a capacity license. With capacity licensing, the overall amount or rate of traffic for the service is capped or otherwise constrained by a licensed transaction capacity 18. For the non-limiting IM service example, the licensed transaction capacity 18 may be expressed as a maximum allowed messages-per-second (MPS) value. More broadly, the licensed transaction capacity 18 may be expressed as a limit on the allowed number of transactions-per-second (TPS), or expressed as some other constraint that limits the volume or rate of traffic permitted to be processed for the licensed service 14.

To that end, and of particular interest herein, the set 20 of individual traffic processors that process the service traffic operate under the control of a license manager 22. According to teachings herein, the license manager 22 makes an initial distribution of the licensed transaction capacity 18 among the individual traffic processors (not individually shown) within the traffic processor set 20. The allocation of licensed capacity to each traffic processor caps or otherwise sets that traffic processor's capacity for processing traffic for the licensed service 14. The license manager 22 thereafter ensures efficient utilization of the licensed transaction capacity 18 by dynamically redistributing the licensed transaction capacity 18 among the individual traffic processors, as a function of the actual traffic loads at the individual traffic processors. Those skilled in the art will appreciate that the license manager may be configured to provide license management for any number of licensed services, where the management of license capacity for each such service is based on the actual traffic loads for that service:

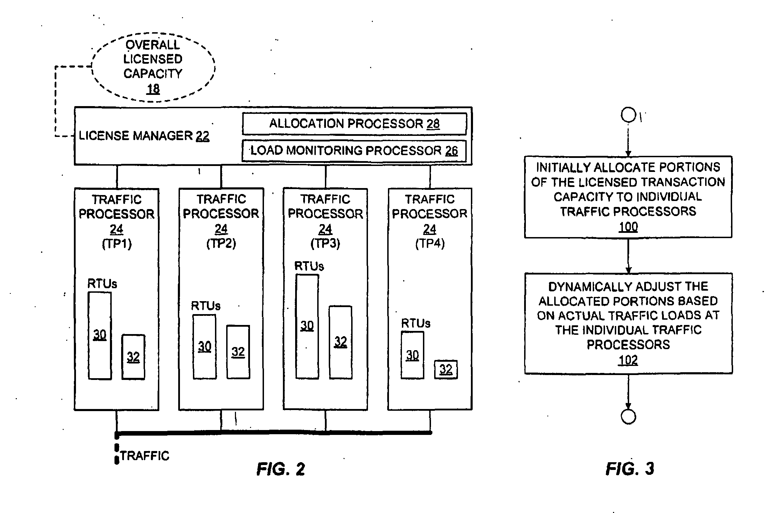

Fig. 2 provides a more detailed view of one embodiment of the license manager 22, wherein the traffic processor set 20 is broken out as a number of individual traffic processors 24. The drawing illustrates TP1...TP4, but those skilled in the art will appreciate that greater or lesser numbers of traffic processors may be involved. Indeed, it should be understood that there may be multiple traffic processor sets 20, each set having a corresponding license manager 22 and a corresponding licensed transaction capacity 18 to draw from for each licensed service being managed. Additionally, or alternatively, there may be one or more license managers 22, each managing multiple traffic processors sets 20. Thus, the teachings herein may be used for managing licensed transaction capacity for different types of services within the same network, and different types of license managers (or differently provisioned license managers) all may be deployed within the telecommunication network 10.

Returning to the diagram, the simplified depiction presented in Fig. 2 provides a ready basis for more detailed discussion of capacity license management for a given service 14 being provided collectively by the individual traffic processors 24. Here, the license manager 22 includes one or more processing circuits that are configured to carry out the capacity license management method illustrated in Fig. 3.

In the processing of Fig. 3, the license manager 22 initially allocates portions of the licensed transaction capacity 18 to individual traffic processors 24, which collectively support the licensed service (Block 100). Processing continues with dynamically adjusting the allocated portions based on actual traffic loads of the individual traffic processors 24 (Block 102).

It should be understood that such processing may be performed as part of a larger set of processing tasks, and that Block 102 generally represents ongoing processing for live operation of the service. Block 102 may be repeated, for example, at time intervals, or performed on an as-needed basis. The need for reallocation of licensed capacity may be detected by continuously or periodically monitoring traffic loads at the individual traffic processors 24. Further, it should be understood that such license management may be performed at the same time for more than one licensed service.

As a non-limiting example of a functional configuration, the processing circuits of the license manager 22 include a traffic load monitoring processor 26 that determines traffic loads of the individual traffic processors 24, such as by measuring traffic loads or by receiving reported traffic loads. The illustrated processing circuits further include an allocation processor 28, which determines the initial allocation and dynamic reallocation of licensed capacity among the traffic processors 24. Thus, the license manager 22 is operative to reserve shares of the licensed capacity for a specific service being provided by or through a number of individual traffic processors 24, based on the traffic loads at those traffic processors.

The license manager's processors may be implemented via the execution of stored program instructions, e.g., a computer program product loaded in or otherwise accessible to the license manager 22. Of course, even with software-based, functional realization of the illustrated processors, at least some of the supporting processing may be performed in hardware, as needed or desired.

- Regardless of the implementation details, one sees that each traffic processor 24 has an allocated license capacity 30, labeled as "RTU" in the figure, representing "Rights to Use". RTU's are measured or otherwise represented as transactions-per-second or other representation of licensed transaction capacity. Thus, performing one licensed transaction consumes (or temporarily claims) a single RTU, such that the number of RTUs at a given traffic processor 24 represents the rate at which transactions for the licensed service can be processed at the given traffic processor.

During live, ongoing operation of the service 14, each traffic processor 24 has a traffic load 32 for a given licensed service. The traffic load 32 generally fluctuates over time, e.g., responsive to changing numbers of subscribers using the service. The traffic load 32 also may change responsive to changes in how the overall amount of service-related traffic is split among the traffic processors 24, such as may be done optionally as part of load redistribution processing.

It generally is not desirable for the level of the traffic load 32 at a given traffic processor 24 to be at or near the level of the allocated license capacity 30. However, those skilled in the art will appreciate that a low level of traffic load 32 relative to the level of allocated license capacity 30 represents underutilization of the overall licensed transaction capacity 18, at least to the extent that one or more of the remaining individual traffic processors 24 have high traffic loads and could process still more traffic if they had higher capacity allocations. The licensing manager 22 and the corresponding method presented herein avoid those underutilization inefficiencies by redistributing allocated capacities as a function of actual license usage at the individual traffic processors 24. In this sense, license usage is evaluated in relative terms, e.g., high or low, such that allocated capacity may be reduced at a traffic processor 24 having a low traffic load, thereby allowing the allocated capacity to be increased at a traffic processor 24 having a high traffic load.

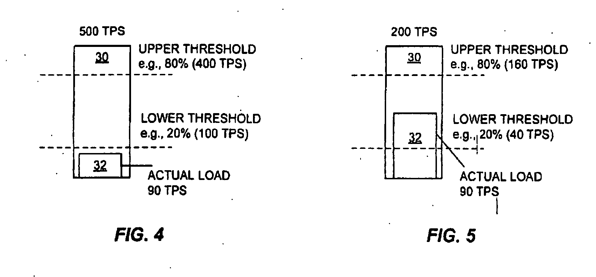

Figs. 4 and 5 illustrate the effect of dynamic re-allocation by the license manager 22 for a given traffic processor 24, and also illustrate an example basis contemplated herein for evaluating/triggering dynamic reallocation. In particular, Fig. 4 illustrates a hypothetical current capacity allocation 30 of 500 TPS, meaning that the traffic processor currently is permitted to perform up to 500 TPS for the licensed service.

In contrast, the actual traffic load is 90 TPS. The license manager 22 thus may compare the current level of traffic with the allocated capacity to determine whether the traffic processor 24 is lightly loaded or heavily loaded. In the former case, the traffic manager 22 may decrease the allocated capacity, while in the latter case the traffic manager may increase the allocated capacity, assuming reserve capacity is available.

As shown, the low/high evaluations are made using lower and upper load thresholds. These load thresholds are expressed as percentages of the currently allocated capacity, such that the high and low thresholds remain consistent in relation to changes in the allocated capacity. In Fig. 4, for example, the lower threshold is set at twenty percent of the currently allocated 500 TPS capacity. Numerically, this setting equates to 100 MPS for the current allocation. Similarly, the upper threshold is set at eighty percent of the allocated capacity, which equates to 400 MPS for the current capacity allocation.

In response to determining that license usage is low, the license manager 22 decreases the allocated capacity to 200 MPS, which is illustrated in Fig. 5. (In one or more embodiments, the amount by which the allocated capacity is decreased represents the amount by which licensed capacity can be increased at other traffic processors 24.) With the changed allocation, one sees that the actual traffic load is much better centered between the lower and upper thresholds, which now equate to 40 MPS and 160 MPS, respectively.

It is contemplated herein that the allocation adjustments are made in consideration of the difference between the actual traffic load and the currently allocated capacity, and/ or the difference between the actual traffic load and the low/high thresholds. From another perspective, the license manager 22 may determine the allocation adjustment so that new capacity allocation substantially centers the actual traffic load between the levels determined by the low and high thresholds. Note that the actual traffic load may be determined at timed intervals, such as where the individual traffic processors 24 periodically report traffic load information to the license manager 22, or where the license manager 22 periodically queries for such information. In any case, the traffic load information may represent filtered or otherwise time-qualified values, to provide more reliable values for comparison.

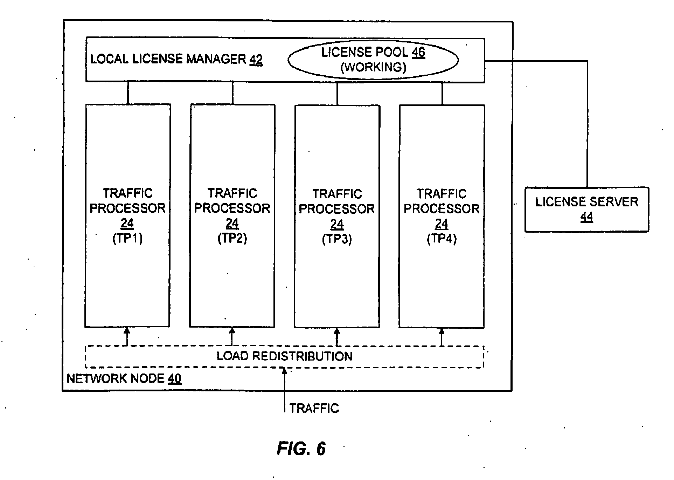

Fig. 6 illustrates a basis for practicing the above dynamic capacity reallocation, wherein a single node 40 includes a number of individual traffic processors 24, denoted as TP1 through TP4. While the telecommunication network 10 is not illustrated in Fig. 6, in one or more embodiments the node 40 comprises part of the telecommunication network 10. Further, the previously described license manager 22 may be implemented in whole or in part in a local license manager 42, which is implemented in or associated with the node 40. Alternatively, the previously described license manager 22 may be implemented in whole or in part in a license server 44, which may, for example, manage the overall licensed transaction capacity for the node 40.

Thus, in at least one embodiment, the local license manager 42 "receives" the overall licensed transaction capacity 18, which is collectively allocated to the node 40, and makes an initial allocation of portions of that capacity to the individual traffic processors TP1 - TP4. After that, the local license manager 42 dynamically reallocates the allocated portions as a function of actual traffic loads at TP1 - TP4. The local license manager 42 also may request increases in the overall licensed capacity 18 from the license server 18, such as when all or most of the original licensed transaction capacity 18 is being used by the traffic processors TP1 - TP4.

The license manager 22, such as represented by the local license manager 42 in the illustrated embodiment, may hold a pool 46 of license tokens. The licensed transaction capacity 18 thus may be represented in the pool 46 as an overall number of license tokens. Initially, the local license manager 42 may empty the pool 46 by making initial allocations of license tokens to the individual traffic processors 24.

During operation-i.e., processing of traffic for the licensed service(s)-the local license manager 42 uses the pool 46 as a temporary holder for license tokens taken back from one or more of the traffic processors 24 that are lightly loaded, for reallocation as needed to one or more of the traffic processors 24 that are heavily loaded. More particularly, the license manager 22 as taught herein may be configured to release a number of license tokens from a traffic processor 24 having a low license token usage relative its current allocated share of license tokens, and store the released license tokens at least temporarily in the license token pool 46. Further, the license manager 22 uses the pool 46 as a reservoir of available license tokens, of course it may not hold license tokens in the pool 46, other than on a transient basis as it performs dynamic re-allocations. In any case, in at least one embodiment, the pool 46 holds license tokens released (or additionally allocated), and the license manager 22 allocates a number of license tokens from the pool 46 to a traffic processor 24 having a high license token usage relative to its current allocated share of license tokens.

In another embodiment, the local license manager 42 reports traffic load information for the traffic processors TP1 - TP4, e.g., it may report license usage levels, to the license server 44. With that information, the license server 44 performs the dynamic reallocation of the licensed transaction capacity 18 among the traffic processors TP1 - TP4, within the node 40. One advantage of this approach is that the reallocation intelligence is consolidated in the license server 44 and thus exploited for other nodes of traffic processors, having their own overall license capacity allocations, or sharing their license capacity allocations with the illustrated node 40. Put another, way, the dynamic adjustment of allocated capacity may be performed by local license managers within given nodes containing the traffic processors 24 of interest, or may be performed by the license server 44, independently for sets of traffic processors in single nodes, or for sets of traffic processors spanning nodes.

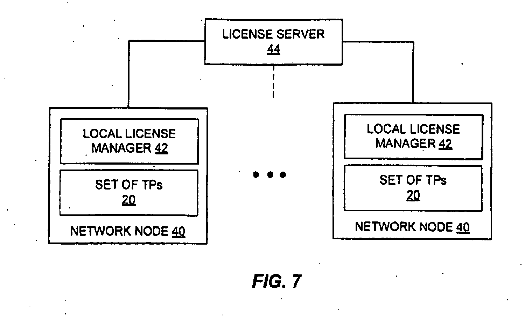

Fig. 7, for example, illustrates a license server 44 associated with multiple local license servers 42 in multiple nodes 40 within the telecommunication network. The different nodes 40 may provide the same licensed service, or may provide different licensed services, and may share overall licensed transaction capacity, or each have their own overall licensed transaction capacities. For example, a set of traffic processors of interest may span two or more nodes 40, and the license server can be configured to perform the dynamic adjustment of allocated portions of licensed capacity across the nodes 40.

Whether done locally within individual nodes 40, or done across nodes 40, the overall licensed transaction capacity 18 may be viewed as a pool of license tokens, each token representing a fraction of the overall licensed capacity. Thus, the licensing manager 22 may comprise one or more processing circuits configured to distribute an overall number of license tokens among individual traffic processors 24 in a traffic processor set 20. The overall number of license tokens represents the licensed transaction capacity 18 allocated to the traffic processor set 20.

The licensing manager 22 in such embodiments is further configured to redistribute the license tokens among the individual traffic processors 24, responsive to differences in license token usage levels among the individual traffic processors. In operation, the license manager 22 periodically determines the differences in license token usage levels among the individual traffic processors 24, and correspondingly redistributes the license tokens among the individual traffic processors 24 on an as-needed basis. As described earlier, license token usage levels for the individual traffic processors 24 may be determined by comparing current license token usage levels to defined upper and lower usage thresholds. For example, the license manager 22 may release license tokens from a traffic processor having a low level of license token usage, and give some or all of the released tokens to another traffic processor 24 having a high level of license token usage.

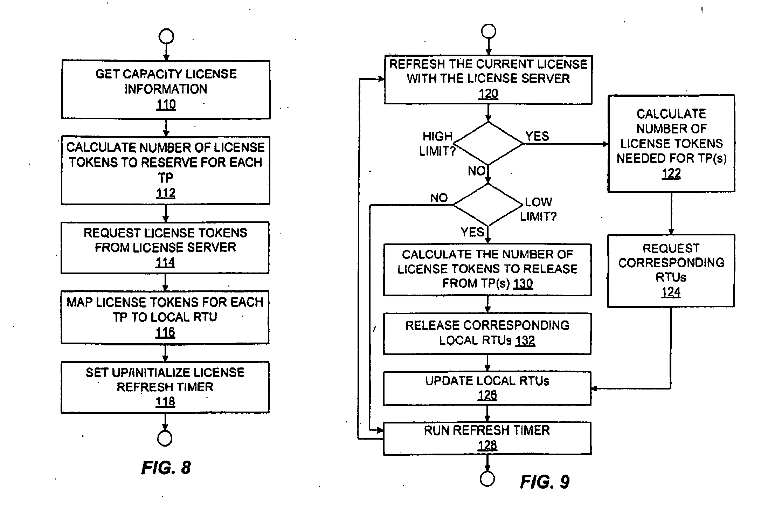

Fig. 8 illustrates example processing, wherein the license manager obtains capacity license information (Block 110), e.g., the license manager 22 determines the overall licensed transaction capacity 18. Processing continues with the license manager 22 determining the number of license tokens to reserve for each traffic processor 24 (Block 112), where the illustration abbreviates 'traffic processor' as TP.' As a non-limiting example, the license manager 22 may be configured to make an initial uniform distribution of license tokens, such as by dividing the overall number of license tokens by the number of individual traffic processors 24 sharing that overall number of license tokens.

Regardless of whether the initial allocation of licensed capacity is uniform or weighted, such as based on knowledge of expected traffic loads, the illustrated processing continues with the license manager 22 requesting or otherwise obtaining the required numbers of license tokens (Block 114), and mapping the allocated license tokens at each traffic processor 24 to local RTUs (Block 116). For example, with momentary reference back to Fig. 6, the local license manager 42 may operate as the license manager 22, and thus may request the required numbers of license tokens from the license server 44, and then map the allocated license tokens to corresponding RTUs within each traffic processor 24 in the local license manager's node 40.

In any case, processing continues with setting up/initializing a license refresh timer (Block 118), which is used to time the interval for evaluating whether dynamic adjustment of the allocated license tokens is needed, based on current traffic loads at the individual traffic processors 24. The license refresh timer may be, for example, a software-based timer, or may be a hardware timer, as needed or desired. The expiration period of the license refresh timer may be preconfigured and/or may be dynamically configured, or at least dynamically updated. For example, the expiration period may be shortened or lengthened responsive to observed changes in traffic loads or distributions of traffic loads from interval to interval.

Where Fig. 8 illustrates one embodiment of initial license token allocations, Fig. 9 illustrates one embodiment of the processing that may be carried out at timed expirations of the license refresh timer. Assuming a local license manager 42 and a license server 44 as shown in Fig. 6, the processing of Fig. 9 thus begins with the local license manger 42 refreshing the node's current capacity license with the license server 44 (Block 120). This processing operation may include requesting an overall increase in the licensed transaction capacity 18, such as would be appropriate if heavy traffic loads existed at some or all of the individual traffic processors 24 within the node 40 shown in Fig. 6.

The illustrated blocks 122, 124, 126, 128, 130, and 132 are then carried out for each traffic processor of interest, and it should be understood that at least these blocks in the illustrated processing flow may be replicated for parallel evaluation of more than one traffic processor 24 at a time. Thus, assuming a given traffic processor 24, it is determined whether the current level of license usage is high or low. If the level is high, processing continues with a determination of the number of additional license tokens needed to achieve the desired margin between the actual traffic load and the traffic processor's licensed capacity limit, as defined by the number of license tokens allocated to it (Block 122). The needed number of additional tokens are requested (Block 124), and processing continues with updating the local RTUs at the traffic processor 24 (Block 126).

Processing further continues with resetting of the license refresh timer, at least for this given traffic processor 24 (Block 128). For example, the interval at which each traffic processor's load is evaluated may be timed independently, synchronous or asynchronous with the timing of intervals for the other traffic processors 24. Tokens released from one traffic processor 24 may be banked or otherwise held in a reserve pool until the next traffic processor's token allocation is evaluated. Alternatively, Blocks 122, 124, and 126 may be understood as being done in parallel for each traffic processor 24, while timing blocks 120 and 128 may be understood as common interval timing applied to all traffic processors 24 in a set 20 of traffic processors.

The remaining processing, Blocks 130 and 132 are reached in the case that the current traffic load is low, rather than high. In this case, processing includes calculating the number of license tokens to release (Block 130), followed by releasing the determined number of tokens, e.g., for reassignment to more heavily loaded traffic processors 24 (Block 132). Again, the calculation of how many tokens to release may be based on the strategy of maintaining the current actual traffic load midways between the upper and lower load thresholds, which may be expressed in terms of percentage utilization of the allocated number of tokens.

In the above processing, the requested tokens may be granted using license tokens released from traffic processors 24 having low traffic loads, or may be granted based on an increase in the overall licensed transaction capacity 18, such as permitted by a license server 44. Further, increasing the allocation of license tokens at a given traffic processor 24 may use a mix of released license tokens and newly granted license tokens.

In at least one embodiment, however, it should be understood that the overall licensed transaction capacity 18 is at least temporarily fixed, and the allocations of license tokens at one or more heavily loaded traffic processors 24 are increased using license tokens released from one or more lightly loaded traffic processors 24. Thus, with a fixed overall license capacity, license capacity management as taught herein uses a dynamic redistribution of the overall license capacity to reflect differences in traffic loads at the individual traffic processors 24 sharing that overall license capacity.

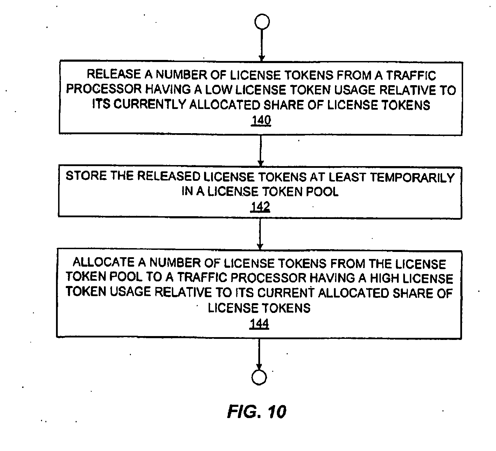

Fig. 10 illustrates one embodiment of a method of managing license capacity for a service in a telecommunication network, which is based on adjusting license token allocations across individual traffic processors 24, as a function of license token usage at those processors. Assuming some current allocation of license tokens at each of the traffic processors of interest, the illustrated processing begins with releasing a number of license tokens from a traffic processor having a low license token usage relative its current allocated share of license tokens (Block 140). Momentarily referring back to Fig. 4, one sees that the determination of low license token usage may be made for a given traffic processor 24 by comparing the actual traffic load 32 for the licensed service that is of interest to a lower load threshold. The lower load threshold may be defined as a percentage of the share of licensed capacity that is currently allocated to the given traffic processor 24.

Turning back to Fig. 10, the illustrated processing continues with storing the released license tokens at least temporarily in a license token pool. As a non-limiting reference, one may refer to Fig. 6, which illustrates a license pool 46 residing within the local license manager 42. Of course, the license pool 46 may exist elsewhere, and may be implemented, for example, as a logical construct. As a specific but non-limiting example, the license pool 46 may simply comprise one or more software and/or hardware counters (or count values) that are used to track the number of currently unallocated or otherwise available license tokens. Thus, if a given traffic processor 24 is using a low percentage of its current license token allocation, that allocation may be reduced by some number and the count of available tokens in the license pool 46 is correspondingly increased by that number.

Returning back to Fig. 10, one sees that the illustrated processing continues with allocating a number of license tokens from the license token pool to a traffic processor having a high license token usage relative to its current allocated share of license tokens (Block 144). Correspondingly, in the embodiment described immediately above, the count of available license tokens would be decreased by the number assigned to the heavily loaded traffic processor. Those skilled in the art will recognize that these monitoring and adjusting steps can be ongoing, such as at periodic measurement/adjustment intervals, and can involve any number of traffic processors 24, within one node or across nodes. Moreover, the capacity license for multiple licensed services may be individually managed in accordance with these teachings.

Generally, then, Figs. 8, 9, 10 and the other illustrative figures and examples given herein are to be understood as non-limiting. Broadly, the teachings herein provide an apparatus and method for managing license capacity for a service in a telecommunication network based on initially allocating portions of a licensed transaction capacity to individual traffic processors supporting the service, and dynamically adjusting the allocated portions based on actual traffic loads of the individual traffic processors. The allocation may be represented in terms of license tokens or other functional representations of an overall licensed transaction capacity 18, and the traffic loads may be determined by tracking license utilization, e.g., by tracking the transactions-per-second being conducted individually by the involved traffic processors 24.

Regardless, according to the teachings herein, the allocated portions are dynamically adjusted to reflect the distribution of actual traffic loads among the individual traffic processors 24, such that licensed capacity is decreased at lightly loaded ones of the traffic processors 24, and correspondingly increased at heavily loaded ones the traffic processors 24. For example, the overall licensed transaction capacity 18 may define an overall messages-per-second (MPS) transaction limit, such as for an IM service. There, - initially allocating portions of the overall licensed transaction capacity 18 to individual traffic processors 24 comprises allocating per-processor MPS transaction limits as fractional shares of the overall MPS transaction limit. These fractional shares are then increased or decreased to reflect actual traffic loads.

Thus, the foregoing description and the accompanying drawings represent non-limiting examples of the methods and apparatus taught herein. As such, the present invention is not limited by the foregoing description and accompanying drawings. Instead, the present invention is limited only by the following claims .

## Claims

1. A method of managing license capacity for a service in a telecommunication network comprising:
initially allocating portions of a licensed transaction capacity to individual traffic processors supporting the service;
determining whether a first given traffic processor has a low traffic load by comparing the actual traffic load of the first given traffic processor to a lower load threshold;
determining whether a second given traffic processor has a high traffic load by comparing the actual traffic load of the second given traffic processor to an upper load threshold;
dynamically adjusting the allocated portions based on the actual traffic loads of the individual traffic processors by decreasing the allocated portion at one or more traffic processors determined to have low traffic loads and increasing the allocated portion at one or more other traffic processors determined to have high traffic loads;
wherein defining the lower and upper load thresholds is done according to allocated portion percentage values, such that values of the lower load threshold and the upper load threshold are relative to the currently allocated portions of licensed transaction capacity respectively at the first and second given traffic processors.

2. The method of Claim 1, further comprising determining an amount by which to decrease the allocated portion at a given traffic processor having a low traffic load as a function of the difference between the actual traffic load and the lower load threshold, and determining an amount by which to increase the allocated portion at a given traffic processor having a high traffic load as a function of the difference between the actual traffic load and the upper load threshold, and as limited by available portions of the licensed transaction capacity.

3. The method of Claim 1, wherein dynamically adjusting the allocated portions based on actual traffic loads of the individual traffic processors comprises dynamically adjusting the allocated portions across a set of traffic processors in a single node of the telecommunication network, and wherein the licensed transaction capacity is collectively allocated to the set of traffic processors within that single node.

4. The method of Claim 1, wherein initially allocating portions of the licensed transaction capacity to individual traffic processors supporting the service comprises initially reserving a number of license tokens for each traffic processor from an overall number of license tokens corresponding to the licensed transaction capacity.

5. The method of Claim 4, wherein dynamically adjusting the allocated portions based on evaluating traffic loading for the individual traffic processors comprises periodically evaluating a current level of license token usage at each traffic processor, and selectively reallocating license tokens from traffic processors with low levels of license token usage to traffic processors having high levels of license usage, wherein low and high levels of license usage are evaluated with respect to defined low and high usage thresholds.

6. The method of Claim 5, further comprising selectively requesting additional license tokens from an associated license server in response to determining that one or more of the traffic processors have a high level of license usage, and, if any additional license tokens are provided, correspondingly allocating at least a portion of the additional license tokens to the one or more traffic processors having a high level of license usage.

7. The method of Claim 1, wherein initially allocating portions of the licensed transaction capacity to individual traffic processors supporting the service comprises initially distributing an overall number of license tokens corresponding to the licensed transaction capacity among the traffic processors, and wherein periodically evaluating a current level of license token usage at each traffic processor comprises periodically evaluating current license usage levels at the individual traffic processors, and selectively reallocating license tokens among the traffic processors to reflect differences in the license usage levels.

8. A license manager for managing license capacity for a service in a telecommunication network, said license manager comprising one or more processing circuits configured to:
initially allocate portions of a licensed transaction capacity to individual traffic processors supporting the service;
determining whether a first given traffic processor has a low traffic load by comparing the actual traffic load of the first given traffic processor to a lower load threshold;
determining whether a second given traffic processor has a high traffic load by comparing the actual traffic load of the second given traffic processor to an upper load threshold;
dynamically adjust the allocated portions based on the actual traffic loads of the individual traffic processors by decreasing the allocated portion at one or more traffic processors determined to have low traffic loads and increasing the allocated portion at one or more other traffic processors determined to have high traffic loads;
wherein defining the lower and upper load thresholds is done according to allocated portion percentage values, such that values of the lower load threshold and the upper load threshold are relative to the currently allocate portions of licensed transaction capacity respectively at the first and second given traffic processors.

9. The license manager of Claim 8, wherein the license manager is configured to determine an amount by which to decrease the allocated portion at a given traffic processor having a low traffic load as a function of the difference between the actual traffic load and the lower load threshold, and determining an amount by which to increase the allocated portion at a given traffic processor having a high traffic load as a function of the difference between the actual traffic load and the upper load threshold, and as limited by available portions of the licensed transaction capacity.

10. The license manager of Claim 8, wherein the individual traffic processors comprise a set of traffic processors within a single node of the telecommunication network, and wherein the license manager comprises a local license manager operating within the single node, and wherein the local license manager is configured to dynamically adjust the allocated portions across the set of traffic processors.

11. The license manager of Claim 8, wherein the license manager further comprises a local license manager in each of the two or more nodes, each local license manager communicatively coupled to the licensed server and configured to report actual traffic load information to the license server, to support the dynamic adjustment of the allocated portions across the two or more nodes by the license server.

12. The license manager of Claim 11, wherein each local license manager is configured to request additional portions of the licensed transaction capacity from the license server in response to detecting high traffic load conditions at the local license manager's node, and configured to release previously allocated portions of the licensed transaction capacity to the license server in response to detecting low traffic load conditions at the local license manager's node.

13. The license manager of Claim 8, wherein the license manager is configured to initially allocate portions of the licensed transaction capacity to the individual traffic processors by initially reserving a number of license tokens for each traffic processor from an overall number of license tokens corresponding to the licensed transaction capacity.

14. The license manager of Claim 13, wherein the license manager is configured to dynamically adjust the allocated portions by periodically evaluating a current level of license token usage at each traffic processor and selectively reallocating license tokens from traffic processors with low levels of license token usage to traffic processors having high levels of license usage, wherein low and high levels are evaluated with respect to defined low and high usage thresholds.

15. The license manager of Claim 14, wherein the license manager is configured to selectively request additional license tokens from an associated license server in response to determining that one or more of the traffic processors have a high level of license usage, and, if any additional license tokens are provided, correspondingly allocate at least a portion of the additional license tokens to the one or more traffic processors having a high level of license usage.

16. The license manager of Claim 8, wherein the license manager is configured to initially allocate portions of the licensed transaction capacity to the individual traffic processors by initially distributing an overall number of license tokens corresponding to the licensed transaction capacity among the traffic processors, and is configured to periodically evaluate the current level of license token usage at each traffic processor by periodically evaluating current license usage levels at the individual traffic processors and selectively reallocate license tokens among the traffic processors to reflect differences in the license usage levels

17. The license manager of Claim 8, wherein the one or more processing circuits comprise a traffic load monitoring processor configured to process load information relating to the actual traffic loads at the individual traffic processors, and an allocation processor configured to perform said dynamic adjustment of the allocated portions based on the load information.

## Patentansprüche

1. Verfahren zum Verwalten von Lizenzkapazität für einen Dienst in einem Telekommunikationsnetzwerk, welches umfasst:
zunächst Zuweisen von Teilen einer lizenzierten Transaktionskapazität zu einzelnen Traffic-Prozessoren, welche den Dienst unterstützen;
Bestimmen, ob ein erster gegebener Traffic-Prozessor eine niedrige Traffic-Last hat, durch Vergleichen der tatsächlichen Traffic-Last des ersten gegebenen Traffic-Prozessors mit einem niedrigen Lastschwellenwert;
Bestimmen, ob ein zweiter gegebener Traffic-Prozessor eine hohe Traffic-Last hat, durch Vergleichen der tatsächlichen Traffic-Last des zweiten gegebenen Traffic-Prozessors mit einem oberen Lastschwellenwert;
dynamisches Anpassen der zugewiesenen Teile basierend auf den tatsächlichen Traffic-Lasten der einzelnen Traffic-Prozessoren durch Verringern des zugewiesenen Teils an einem oder mehreren Traffic-Prozessoren, für welche bestimmt wurde, dass sie niedrige Traffic-Lasten haben, und Erhöhen des zugewiesenen Teils an einem oder mehr anderen Traffic-Prozessoren, für welche bestimmt wurde, dass sie hohe Traffic-Lasten haben;
wobei ein Definieren der unteren und oberen Lastschwellenwerte gemäß Prozentwerten von zugewiesenen Teilen durchgeführt wird, so dass Werte des unteren Lastschwellenwerts und des oberen Lastschwellenwerts relativ zu den derzeitig zugewiesenen Teilen von lizenzierter Transaktionskapazität jeweils an den ersten und zweiten gegebenen Traffic-Prozessoren sind.

2. Verfahren nach Anspruch 1, ferner umfassend ein Bestimmen einer Größe, um welche der zugewiesene Teil an einem gegebenen Traffic-Prozessor mit einer niedrigen Traffic-Last verringert wird, als eine Funktion der Differenz zwischen der tatsächlichen Traffic-Last und dem unteren Lastschwellenwert, und Bestimmen einer Größe, um welche der zugewiesene Teil an einem gegebenen Traffic-Prozessor mit einer hohen Traffic-Last erhöht werden soll, als eine Funktion der Differenz zwischen der tatsächlichen Traffic-Last und dem oberen Lastschwellenwert, und wie begrenzt durch verfügbare Teile der lizenzierten Transaktionskapazität.

3. Verfahren nach Anspruch 1, wobei ein dynamisches Anpassen des zugewiesenen Teiles basierend auf tatsächlichen Traffic-Lasten der einzelnen Traffic-Prozessoren ein dynamisches Anpassen der zugewiesenen Teile über eine Gruppe von Traffic-Prozessoren in einem einzelnen Knoten des Telekommunikationsnetzwerks umfasst, und wobei die lizenzierte Transaktionskapazität insgesamt der Gruppe von Traffic-Prozessoren innerhalb des einzelnen Knotens zugewiesen wird.

4. Verfahren nach Anspruch 1, wobei das anfängliche Zuweisen von Teilen der lizenzierte Transaktionskapazität an einzelne Traffic-Prozessoren, welche den Dienst unterstützen, anfängliches Reservieren einer Zahl an Lizenz-Token für jeden Traffic-Prozessor umfasst, aus einer Gesamtzahl von Lizenz-Token, entsprechend der lizenzierten Transaktionskapazität.

5. Verfahren nach Anspruch 4, wobei ein dynamisches Anpassen der zugewiesenen Teile basierend auf einer evaluierten Traffic-Last für die einzelnen Traffic-Prozessoren periodisches Evaluieren eines derzeitigen Grads an Lizenz-Token-Nutzung an jedem Traffic-Prozessor umfasst, und ein selektives erneutes Zuweisen von Lizenz-Token von Traffic-Prozessoren mit niedrigen Graden an Lizenz-Token-Nutzung zu Traffic-Prozessoren mit hohen Graden an Lizenznutzung, wobei niedrige und hohe Grade an Lizenznutzung hinsichtlich definierten niedrigen und hohen Nutzungsschwellenwerte evaluiert werden.

6. Verfahren nach Anspruch 5, ferner umfassend ein selektives Anfordern von zusätzlichen Lizenz-Token aus einem zugeführten Lizenzserver ansprechend auf ein Bestimmen, dass einer oder mehr der Traffic-Prozessoren einen hohen Grad an Lizenznutzung aufweist, und, falls ein zusätzlicher Lizenz-Token bereitgestellt wird, entsprechendes Zuweisen von wenigstens einem Teil der zusätzlichen Lizenz-Token an den einen oder mehr Traffic-Prozessoren mit einem hohen Grad an Lizenznutzung.

7. Verfahren nach Anspruch 1, wobei ein anfängliches Zuweisen von Teilen der lizenzierten Transaktionskapazität zu einzelnen Traffic-Prozessoren, welche den Dienst unterstützen, ein anfängliches Verteilen einer Gesamtzahl an Lizenz-Token umfasst, welche der lizenzierten Transaktionskapazität entsprechen, an die Traffic-Prozessoren, und wobei ein periodisches Evaluieren eines derzeitigen Grads an Lizenz-Token-Nutzung an jedem Traffic-Prozessor periodisches Evaluieren von derzeitigen Lizenznutzungsgraden an den einzelnen Traffic-Prozessoren umfasst, und selektives erneutes Zuweisen von Lizenz-Token an die Traffic-Prozessoren, um Differenzen der Lizenznutzungsgrade zu reflektieren.

8. Lizenzverwalter zum Verwalten von Lizenzkapazität für einen Dienst in einem Telekommunikationsnetzwerk, wobei der Lizenzverwalter eine oder mehr Verarbeitungsschaltungen umfasst, konfiguriert zum:
anfänglichen Zuweisen von Teilen von einer lizenzierten Transaktionskapazität an einzelne Traffic-Prozessoren, welche den Dienst unterstützen;
Bestimmen, ob ein erster gegebener Traffic-Prozessor eine niedrige Traffic-Last aufweist, durch Vergleichen der tatsächlichen Traffic-Last des ersten gegebenen Traffic-Prozessors mit einem unteren Lastschwellenwert;
Bestimmen, ob ein zweiter gegebener Traffic-Prozessor eine hohe Traffic-Last aufweist, durch Vergleichen der tatsächlichen Traffic-Last des zweiten gegebenen Traffic-Prozessors mit einem oberen Lastschwellenwert;
dynamischen Anpassen der zugewiesenen Teile basierend auf den tatsächlichen Traffic-Lasten der einzelnen Traffic-Prozessoren durch Verringern des zugewiesenen Teils bei einem oder mehr Traffic-Prozessoren, für welche niedrige Traffic-Lasten festgestellt wurden, und Erhöhen des zugewiesenen Teils bei einem oder mehreren anderen Traffic-Prozessoren, für welche hohe Traffic-Lasten festgestellt wurden;
wobei ein Definieren der unteren und oberen Lastschwellenwerten gemäß Prozentwerten von zugewiesenen Teilen erfolgt, so dass Werte des unteren Lastschwellenwerts und des oberen Lastschwellenwerts relativ zu den derzeitig zugewiesenen Teilen an lizenzierter Transaktionskapazität jeweils an den ersten und zweiten gegebenen Traffic-Prozessoren sind.

9. Lizenzverwalter nach Anspruch 8, wobei der Lizenzverwalter konfiguriert ist, eine Größe zu bestimmen, um welche der zugewiesene Teil an einem gegebenen Traffic-Prozessor mit einer niedrigen Traffic-Last verringert wird, als eine Funktion der Differenz zwischen der tatsächlichen Traffic-Last und dem unteren Lastschwellenwert, und Bestimmen einer Größe, um welche der zugewiesene Teil an einem gegebenen Prozessor mit einer hohen Traffic-Last erhöht wird, als eine Funktion der Differenz zwischen der tatsächlichen Traffic-Last und dem oberen Lastschwellenwert, und wie begrenzt durch verfügbare Teile der lizenzierten Transaktionskapazität.

10. Lizenzverwalter nach Anspruch 8, wobei die einzelnen Traffic-Prozessoren eine Gruppe an Traffic-Prozessoren innerhalb eines einzelnen Knotens des Telekommunikationsnetzwerks umfassen, und wobei der Lizenzverwalter einen lokalen Lizenzverwalter umfasst, welcher innerhalb des einzelnen Knotens betrieben wird, und wobei der lokale Lizenzverwalter konfiguriert ist, die zugewiesenen Teile über eine Gruppe an Traffic-Prozessoren dynamisch anzupassen.

11. Lizenzverwalter nach Anspruch 8, wobei der Lizenzverwalter ferner einen lokalen Lizenzverwalter in jedem der zwei oder mehr Knoten umfasst, wobei jeder lokale Lizenzverwalter kommunikativ an einen Lizenzserver gekoppelt ist und konfiguriert ist, eine Information über eine tatsächliche Traffic-Last an den Lizenzserver zu berichten, um die dynamische Anpassung der zugewiesenen Teile über die zwei oder mehr Knoten durch den Lizenzserver zu unterstützen.

12. Lizenzverwalter nach Anspruch 11, wobei jeder lokale Lizenzverwalter konfiguriert ist, zusätzliche Teile der lizenzierten Transaktionskapazität aus dem Lizenzserver anzufordern, ansprechend auf ein Erfassen von Zuständen hoher Traffic-Last an dem Knoten des lokalen Lizenz-Managers, und konfiguriert ist, zuvor zugewiesene Teile der lizenzierte Transaktionskapazität an den Lizenzserver freizugeben ansprechend auf ein Erfassen von Zuständen niedriger Traffic-Last an dem Knoten des lokalen Lizenzverwalters.

13. Lizenzverwalter nach Anspruch 8, wobei der Lizenzverwalter konfiguriert ist, zunächst Teile der lizenzierten Transaktionskapazität den einzelnen Traffic-Prozessoren zuzuweisen durch anfängliches Reservieren einer Zahl an Lizenz-Token für jeden Traffic-Prozessor aus einer Gesamtzahl an Lizenz-Token entsprechend der lizenzierten Transaktionskapazität.

14. Lizenzverwalter nach Anspruch 13, wobei der Lizenzverwalter konfiguriert ist, die zugewiesenen Teile dynamisch anzupassen durch periodisches Evaluieren eines derzeitigen Grads an Lizenz-Token-Nutzung an jedem Traffic-Prozessor und selektives erneutes Zuweisen von Lizenz-Token von Traffic-Prozessoren mit niedrigen Graden an Lizenz-Token-Nutzung zu Traffic-Prozessoren mit hohen Graden an Lizenznutzung, wobei niedrige und hohe Grade hinsichtlich definiertem niedrigen und hohen Nutzungsschwellenwerten evaluiert werden.

15. Lizenzverwalter nach Anspruch 14, wobei der Lizenzverwalter konfiguriert ist, selektiv zusätzliche Lizenz-Token aus einem zugehörigen Lizenzserver anzufordern ansprechend auf ein Bestimmen, dass einer oder mehr Traffic-Prozessoren einen hohen Grad an Grad an Lizenznutzung aufweist, und, falls zusätzliche Lizenz-Token bereitgestellt werden, entsprechendes Zuweisen von wenigstens einem Teil des zusätzlichen Lizenz-Token an den einen oder mehr Traffic-Prozessoren mit einem hohen Grad an Lizenznutzung.

16. Lizenzverwalter nach Anspruch 8, wobei der Lizenzverwalter konfiguriert ist, zunächst Teile der lizenzierten Transaktionskapazität an die einzelnen Traffic-Prozessoren zuzuweisen, durch anfängliches Verteilen einer Gesamtzahl an Lizenz-Token, welche der lizenzierten Transaktionskapazität entsprechen, an die Traffic-Prozessoren, und konfiguriert ist, periodisch den derzeitigen Pegel an Lizenz-Token-Nutzung an jedem Traffic-Prozessor zu evaluieren durch periodisches Evaluieren von derzeitigen Lizenz-Nutzungsgraden an den einzelnen Traffic-Prozessoren und selektives erneutes Zuweisen von Lizenz-Token an die Traffic-Prozessoren, um Differenzen der Lizenz-Nutzungsgrade zu reflektieren.

17. Lizenzverwalter nach Anspruch 8, wobei die eine oder mehr Verarbeitungsschaltungen einen Traffic-Last-Beobachtungsprozessor umfasst, welcher konfiguriert ist, Lastinformation zu verarbeiten, bezüglich den tatsächlichen Traffic-Lasten an den einzelnen Traffic-Prozessoren, und einen Zuweisungsprozessor, welcher konfiguriert ist, eine dynamische Anpassung der zugewiesenen Teile basierend auf der Lastinformation durchzuführen.

## Revendications

1. Procédé de gestion d'une capacité de droit d'usage pour un service dans un réseau de télécommunication comprenant le fait :
d'attribuer au départ des parties d'une capacité de transaction autorisée à des processeurs de trafic individuels supportant le service ;
de déterminer si un premier processeur de trafic donné a une charge de trafic basse en comparant la charge de trafic effective du premier processeur de trafic donné à un seuil de charge inférieur ;
de déterminer si un deuxième processeur de trafic donné a une charge de trafic élevée en comparant la charge de trafic effective du deuxième processeur de trafic donné à un seuil de charge supérieur ;
d'ajuster de manière dynamique les parties attribuées sur la base des charges de trafic effectives des processeurs de trafic individuels en réduisant la partie attribuée au niveau d'un ou de plusieurs processeurs de trafic dont on a déterminé qu'ils ont des charges de trafic basses et en augmentant la partie attribuée au niveau d'un ou de plusieurs autres processeurs de trafic dont on a déterminé qu'ils ont des charges de trafic élevées ;
où la définition des seuils de charge inférieur et supérieur est réalisée selon des valeurs en pourcentage de la partie attribuée, de sorte que des valeurs du seuil de charge inférieur et du seuil de charge supérieur soient relatives aux parties actuellement attribuées de la capacité de transaction autorisée respectivement au niveau des premier et deuxième processeurs de trafic donné.

2. Procédé de la revendication 1, comprenant en outre le fait de déterminer une quantité par laquelle réduire la partie attribuée à un processeur de trafic donné ayant une charge de trafic basse comme une fonction de la différence entre la charge de trafic effective et le seuil de charge inférieur, et de déterminer une quantité par laquelle augmenter la partie attribuée à un processeur de trafic donné ayant une charge de trafic élevée comme une fonction de la différence entre la charge de trafic effective et le seuil de charge supérieur, et limitée par des parties disponibles de la capacité de transaction autorisée.

3. Procédé de la revendication 1, dans lequel le fait d'ajuster de manière dynamique les parties attribuées sur la base de charges de trafic effectives des processeurs de trafic individuels comprend le fait d'ajuster de manière dynamique les parties attribuées sur un ensemble de processeurs de trafic dans un noeud unique du réseau de télécommunication, et où la capacité de transaction autorisée est attribuée de manière collective à l'ensemble de processeurs de trafic dans ce noeud unique.

4. Procédé de la revendication 1, dans lequel le fait d'attribuer au départ des parties de la capacité de transaction autorisée à des processeurs de trafic individuels supportant le service comprend le fait de réserver au départ un nombre de jetons de droit d'usage pour chaque processeur de trafic parmi un nombre global de jetons de droit d'usage correspondant à la capacité de transaction autorisée.

5. Procédé de la revendication 4, dans lequel le fait d'ajuster de manière dynamique les parties attribuées sur la base de l'évaluation d'une charge de trafic pour les processeurs de trafic individuels comprend le fait d'évaluer périodiquement un niveau actuel d'utilisation de jeton de droit d'usage au niveau de chaque processeur de trafic, et le fait de réattribuer au choix des jetons de droit d'usage de processeurs de trafic à faibles niveaux d'utilisation de jetons de droit d'usage à des processeurs de trafic ayant des niveaux élevés d'utilisation de droit d'usage, où des niveaux faibles et élevés d'utilisation de droit d'usage sont évalués par rapport à des seuils d'utilisation faibles et élevés définis.

6. Procédé de la revendication 5, comprenant en outre le fait de demander, au choix, des jetons de droit d'usage additionnels à partir d'un serveur de droit d'usage associé en réponse à la détermination qu'un ou plusieurs des processeurs de trafic ont un niveau élevé d'utilisation de droit d'usage, et, si des jetons de droit d'usage additionnels sont prévus, d'attribuer de manière correspondante au moins une partie des jetons de droit d'usage additionnels à l'un ou aux plusieurs processeurs de trafic ayant un niveau élevé d'utilisation de droit d'usage.

7. Procédé de la revendication 1, dans lequel le fait d'attribuer au départ des parties de la capacité de transaction autorisée à des processeurs de trafic individuels supportant le service comprend le fait de distribuer au départ un nombre global de jetons de droit d'usage correspondant à la capacité de transaction autorisée parmi les processeurs de trafic, et où le fait d'évaluer périodiquement un niveau actuel d'utilisation de jeton de droit d'usage au niveau de chaque processeur de trafic comprend le fait d'évaluer périodiquement des niveaux actuels d'utilisation de droit d'usage au niveau des processeurs de trafic individuels, et de réattribuer au choix des jetons de droit d'usage sur les processeurs de trafic pour refléter des différences entre les niveaux d'utilisation de droit d'usage.

8. Gestionnaire de droit d'usage destiné à gérer une capacité de droit d'usage pour un service dans un réseau de télécommunication, ledit gestionnaire de droit d'usage comprenant un ou plusieurs circuits de traitement configurés :
pour attribuer au départ des parties d'une capacité de transaction autorisée à des processeurs de trafic individuels supportant le service ;
pour déterminer si un premier processeur de trafic donné a une charge de trafic basse en comparant la charge de trafic effective du premier processeur de trafic donné à un seuil de charge inférieur ;
pour déterminer si un deuxième processeur de trafic donné a une charge de trafic élevée en comparant la charge de trafic effective du deuxième processeur de trafic donné à un seuil de charge supérieur ;
pour ajuster de manière dynamique les parties attribuées sur la base des charges de trafic effectives des processeurs de trafic individuels en réduisant la partie attribuée au niveau d'un ou de plusieurs processeurs de trafic dont on a déterminé qu'ils ont des charges de trafic basses et en augmentant la partie attribuée au niveau d'un ou de plusieurs autres processeurs de trafic dont on a déterminé qu'ils ont des charges de trafic élevées ;
où la définition des seuils de charge inférieur et supérieur est réalisée selon des valeurs de pourcentage de la partie attribuée, de sorte que des valeurs du seuil de charge inférieur et du seuil de charge supérieur soient relatives aux parties actuellement attribuées de la capacité de transaction autorisée respectivement au niveau des premier et deuxième processeurs de trafic donnés.

9. Gestionnaire de droit d'usage de la revendication 8, dans lequel le gestionnaire de droit d'usage est configuré pour déterminer une quantité par laquelle réduire la partie attribuée à un processeur de trafic donné ayant une charge de trafic basse comme une fonction de la différence entre la charge de trafic effective et le seuil de charge inférieur, et déterminer une quantité par laquelle augmenter la partie attribuée à un processeur de trafic donné ayant une charge de trafic élevée comme une fonction de la différence entre la charge de trafic effective et le seuil de charge supérieur, et limitée par des parties disponibles de la capacité de transaction autorisée.

10. Gestionnaire de droit d'usage de la revendication 8, dans lequel les processeurs de trafic individuels comprennent un ensemble de processeurs de trafic dans un noeud unique du réseau de télécommunication, et où le gestionnaire de droit d'usage comprend un gestionnaire de droit d'usage local fonctionnant dans le noeud unique, et où le gestionnaire de droit d'usage local est configuré pour ajuster de manière dynamique les parties attribuées sur l'ensemble de processeurs de trafic.

11. Gestionnaire de droit d'usage de la revendication 8, dans lequel le gestionnaire de droit d'usage comprend en outre un gestionnaire de droit d'usage local dans chacun des deux noeuds ou plus, chaque gestionnaire de droit d'usage local couplé en communication avec le serveur de droit d'usage et configuré pour rapporter des informations de charge de trafic effective au serveur de droit d'usage, pour supporter l'ajustement dynamique des parties attribuées sur les deux noeuds ou plus par le serveur de droit d'usage.

12. Gestionnaire de droit d'usage de la revendication 11, dans lequel chaque gestionnaire de droit d'usage local est configuré pour demander des parties additionnelles de la capacité de transaction autorisée à partir du serveur de droit d'usage en réponse à la détection de conditions de charge de trafic élevée au noeud du gestionnaire de droit d'usage local, et configuré pour libérer des parties précédemment attribuées de la capacité de transaction autorisée au serveur de droit d'usage en réponse à la détection de conditions de charge de trafic basse au noeud du gestionnaire de droit d'usage local.

13. Gestionnaire de droit d'usage de la revendication 8, dans lequel le gestionnaire de droit d'usage est configuré pour attribuer au départ des parties de la capacité de transaction autorisée aux processeurs de trafic individuels en réservant au départ un nombre de jetons de droit d'usage pour chaque processeur de trafic parmi un nombre global de jetons de droit d'usage correspondant à la capacité de transaction autorisée.

14. Gestionnaire de droit d'usage de la revendication 13, dans lequel le gestionnaire de droit d'usage est configuré pour ajuster de manière dynamique les parties attribuées en évaluant périodiquement un niveau actuel d'utilisation de jeton de droit d'usage au niveau de chaque processeur de trafic et de réattribuer au choix des jetons de droit d'usage de processeurs de trafic à faibles niveaux d'utilisation de jeton de droit d'usage à des processeurs de trafic ayant des niveaux élevés d'utilisation de droit d'usage, où des niveaux faibles et élevés sont évalués par rapport à des seuils d'utilisation faibles et élevés définis.

15. Gestionnaire de droit d'usage de la revendication 14, dans lequel le gestionnaire de droit d'usage est configuré pour demander au choix des jetons de droit d'usage additionnels d'un serveur de droit d'usage associé en réponse à la détermination qu'un ou plusieurs des processeurs de trafic ont un niveau élevé d'utilisation de droit d'usage, et, si des jetons de droit d'usage additionnels sont prévus, d'attribuer de manière correspondante au moins une partie des jetons de droit d'usage additionnels à l'un ou aux plusieurs processeurs de trafic ayant un niveau élevé d'utilisation de droit d'usage,.

16. Gestionnaire de droit d'usage de la revendication 8, dans lequel le gestionnaire de droit d'usage est configuré pour attribuer au départ des parties de la capacité de transaction autorisée aux processeurs de trafic individuels en distribuant au départ un nombre global de jetons de droit d'usage correspondant à la capacité de transaction autorisée sur les processeurs de trafic, et est configuré pour évaluer périodiquement le niveau actuel d'utilisation de jeton de droit d'usage au niveau de chaque processeur de trafic en évaluant périodiquement des niveaux actuels d'utilisation de droit d'usage au niveau des processeurs de trafic individuels et réattribuer au choix des jetons de droit d'usage sur les processeurs de trafic pour refléter des différences entre les niveaux d'utilisation de droit d'usage.

17. Gestionnaire de droit d'usage de la revendication 8, dans lequel l'un ou les plusieurs circuits de traitement comprennent un processeur de surveillance de charge de trafic configuré pour traiter des informations de charge se rapportant aux charges de trafic effectives au niveau des processeurs de trafic individuels, et un processeur d'attribution configuré pour réaliser ledit ajustement dynamique des parties attribuées sur la base des informations de charge.
